Europäisches Patentamt

European Patent Office

Office européen des brevets

(19)

(11) Veröffentlichungsnummer: **0 153 556**
**B1**

(12) **EUROPÄISCHE PATENTSCHRIFT**

(45) Veröffentlichungstag der Patentschrift: **05.09.90**

(51) Int. Cl.⁵: **G 05 B 19/405**

(21) Anmeldenummer: **85100209.7**

(22) Anmeldetag: **10.01.85**

(54) **Verfahren zum grafischen Darstellen eines Gebildes.**

(30) Priorität: **13.01.84 DE 3401060**

(43) Veröffentlichungstag der Anmeldung:
**04.09.85 Patentblatt 85/36**

(45) Bekanntmachung des Hinweises auf die
Patenterteilung:
**05.09.90 Patentblatt 90/36**

(84) Benannte Vertragsstaaten:
**AT CH DE FR GB IT LI NL SE**

(56) Entgegenhaltungen:
**EP-A-0 083 836**
**EP-A-0 121 100**
**DE-A-3 234 426**
**FR-A-2 103 525**
**GB-A-2 140 937**

(73) Patentinhaber: **Dr. Johannes Heidenhain GmbH**
**Dr.-Johannes-Heidenhain-Strasse 5 Postfach**
**1260**
**D-8225 Traunreut (DE)**

(72) Erfinder: **Stöhr, Wilfried**
**Birkenstrasse 11**
**D-7531 Neulingen (DE)**
Erfinder: **Grimm, Rudi**
**Kornblumenweg 3a**
**D-7513 Stutensee-Blankenloch (DE)**
Erfinder: **Opitz, Elisabeth**
**Regerweg 4**
**D-7523 Graben-Neudorf (DE)**

Courier Press, Leamington Spa, England.

## Beschreibung

Der Erfindung bezieht sich auf ein Verfahren zum granhischen Darstellen eines Werkstücks nach dem Oberbegriff des Anspruches 1.

Aus der Technik des sogenannten Computeraided design ist es bekannt, Körper perspektivisch am Bildschirm einer Rechnereinheit darzustellen. Diese Verfahren zur Erzeugung von maßgenauen rechnerinternen Modellen erfordern einen sehr hohen Rechenaufwand und sehr viel Speicherplatz, da große Datenstrukturen zu verarbeiten sind. Sie sind nicht geeignet für eine Echtzeit-Nachbildung des Bearbeitungsablaufes in einem preisgünstigen Microcomputersystem beispielsweise für den Einsatz in NC-Steuerungen, denn zur Erzeugung der Datenstruktur für einen Gesamtkörper, also für die Darstellung des Werkstückes, aus einzelnen Teilkörpern, d.h. aus dem Werkstückrohling und den Werkzeugbearbeitungskanälen, muß dabei ein Volumenmodell mit hohem Speicher- und Rechenzeitbedarf zugrundegelegt werden.

Die derzeit am Markt befindlichen Bahnsteuerungen für NC-Maschinen unterstützen den Programmierer in sehr unterschiedlicher Weise bei der Übertragung seines durch die technische Zeichnung definierten Problems in das ablauffähige zugehörige NC-Programm. Die bekannten Verfahren zur Verifikation der NC-Programme bei heutigen Steuerungen lassen sich wie folgt einordnen:

—Programmüberprüfung vor Ausführung:

Die heute bekannten und üblichen Methoden zur Sichtbarmachung von Programmierfehlern vor Programmablauf bestehen in der Simulation der Werkstückbearbeitung mit teilweise dreidimensionaler Darstellung der erzeugten Konturen und gefahrenen Werkzeugwege. Keine dieser Darstellungen zeigt jedoch das endgültige Werkstück oder bietet auch nur geometrische Verknüpfungen zwischen den einzelnen Konturstücken. Es wird grundsätzlich nur die einzelne Werkzeugbewegung ohne Bezug zur Werkstückrohling oder anderen Bewegungen sichtbar gemacht. Dies führt bei der heute üblichen Darstellung der erzeugten Konturflächen durch ihre Umrandungslinien schon bei relativ einfachen Bearbeitungsfolgen zu unübersichtlichen statischen Bildern. Eine derartige Darstellung findet sich beispielsweise in der DE—A—3 234 426, von der im Oberbegriff des Anspruches 1 ausgegaugen wird.

Ein bekanntes Verfahren geht von einer Simulation in Form von 2D-Darstellungen durch "Radieren" aufgrund der Werkzeuge, d.h. Weglöschen bzw. Wechsel von vorher in der Darstellung erzeugten, teilweise unterschiedlichen Schraffuren während der (simulierten) Werkstückbearbeitung. Insbesondere bei Bearbeitung in mehreren Ebenen tritt ein Informationsverlust auf. Dieses Verfahren ist auch nicht für 3D-Darstellungen geeignet.

—Programmüberprüfung während der Ausführung:

Eine Echtzeit-Nachbildung des Bearbeitungsablaufes zur Überwachung des NC-Programms mit Darstellung aller erzeugten Konturen ohne geometrische Verknüpfung ist bekannt.

Die angeführten 2D- und 3D-Verfahren erlauben nur eine verknüpfungsfreie Überlagerung der Werkzeugwege oder vordefinierter Konturstücke ohne Darstellung der resultierenden Werkstückkonturen.

Der Erfindung liegt die Aufgabe zugrunde, ein Verfahren zur Abbildung von veränderbaren Gebilden zu schaffen, das keinen hohen Rechenaufwand erfordert und damit auch mit einfacherer apparativer Ausstattung durchführbar ist.

Diese Aufgabe wird durch das im Anspruch 1 angegebene Verfahren gelöst.

Die besonderen Vorteile des erfindungsgemäßen Verfahrens liegen in der erheblichen Reduzierung des Rechenaufwandes, wodurch das Verfahren auch mit Microprozessorsystemen durchgeführt werden kann und wodurch eine sogenannte Echtzeit-Darstellung ermöglicht wird. Trotz des stark verringerten Rechenaufwandes ist eine perspektivische Darstellung möglich, ebenso ist es mit dem Verfahren möglich, Ausschnitte vergrößert zu zeigen und farbig einzelne Bearbeitungszyklen oder Flächenbereiche zu kennzeichnen.

Anhand der Zeichnungen soll das Verfahren noch näher erläutert werden, und es ist ein Blockschaltbild einer Vorrichtung angegeben, mit der das Verfahren durchgeführt werden kann.

Es zeigt

Fig. 1a—1d ein Werkstück vor und nach einem Bearbeitungsgang,

Fig. 2a—2d das Werkstück gemäß Fig. 1 bei einem weiteren Bearbeitungsgang,

Fig. 3a—3d das Werkstück gemäß Fig. 1 und Fig. 2 bei einem dritten Bearbeitungsgang,

Fig. 4a—4d das Werkstück gemäß Fig. 1 bis 3 bei einem zusätzlichen Arbeitsgang,

Fig. 5 ein Blockschaltbild einer Einrichtung zum Durchführen des erfindungsgemäßen Verfahrens.

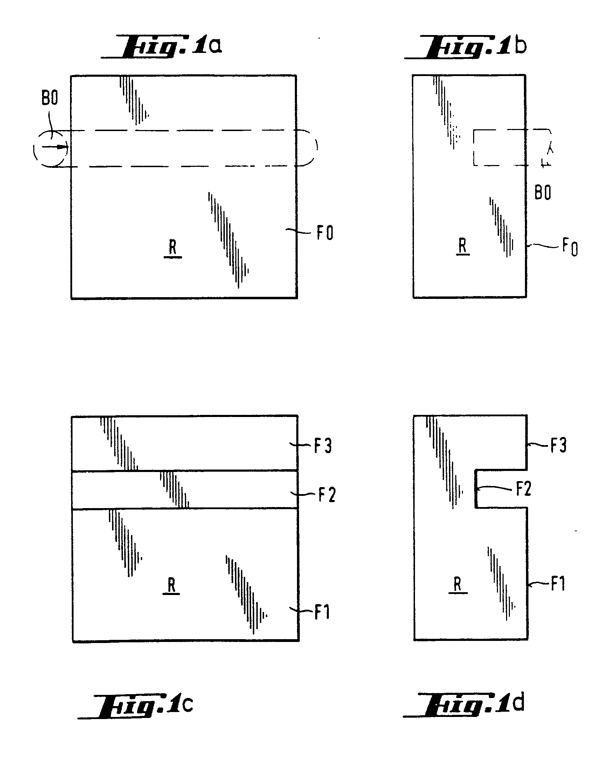

In Figur 1a ist ein Werkstück als Rohling R dargestellt, dessen sichtbare Oberfläche durch ein Polygon bestimmt ist, das die Fläche F0 begrenzt. Ein als Schaftfräser ausgebildetes Werkzeug und dessen vorprogrammierte Werkzeugbahn ist als Bearbeitungspolygon B0 dargestellt und dem durch seine Fläche F0 bezeichneten Rohling R überlagert.

In Figur 1b ist diese Situation in der Seitenansicht dargestellt, um die dritte Dimension, also die Bearbeitungstiefe durch das Werkzeug erkennbar zu machen.

In den Figuren 1c und 1d ist das Werkstück R nach dem in den Figuren 1a und 1b angedeuteten Arbeitsgang bearbeitet dargestellt. Es ist erkennbar, daß die Fläche F0 in drei Teilflächen F1, F2 und F3 aufgeteilt ist, von denen die Flächen F2 entsprechend der sogenannten Zustellung des Werkzeuges tiefer liegt als die beiden Flächen F1 und F3.

Um diese Werkstückbearbeitung am Bildschirm einer NC-gesteuerten Werkzeugmaschine darstellen zu können, werden im Rechner—der hier ein Microcomputer sein kann—anhand der Daten-

strukturen Polygone F0, B0 erzeugt, die zum einen durch die Werkstückdaten gebildet sind, und zum anderen ein Bearbeitungspolygon B0 darstellen, das aus den Abmessungen des Werkzeuges und seiner vorprogrammierten Bewegungsbahn gebildet worden ist.

Diese Polygone F0 und B0 werden verknüpft, so daß sich nach Schnittpunktberechnungen ermitteln läßt, ob und wo sich Werkstück und Werkzeug im Eingriff befinden.

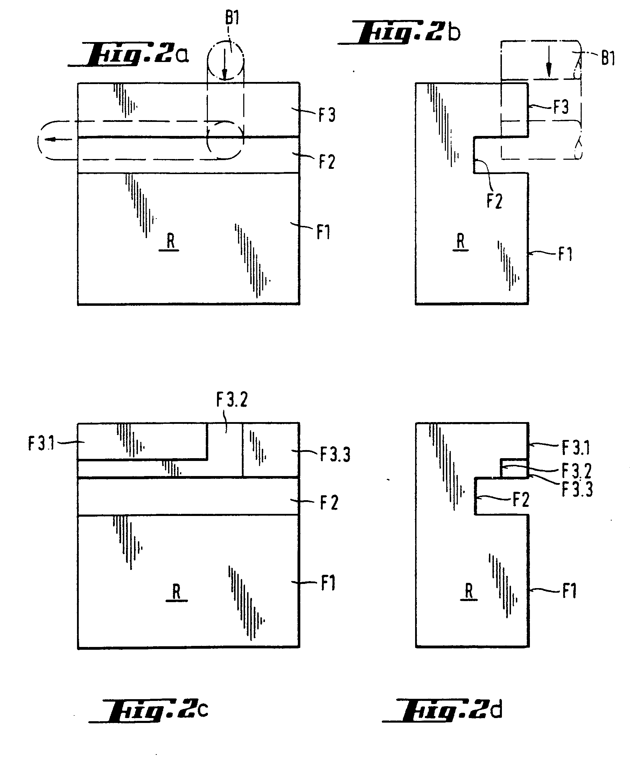

In den Figuren 2a und 2b sind entsprechend der Darstellung in den Figuren 1a und 1b die Werkstückpolygone F1, F2 und F3 und das Bearbeitungspolygon B1 überlagert. Die Polygonverknüpfung erfolgt nun gemäß Vorstehendem durch die Berechnung der Schnittpunkte der Polygone unter Berücksichtigung der dritten Dimension.

Die Polygone F1, F2, F3 sind hierarchisch angeordnet, was bedeutet, daß bei einer Überlagerung des Bearbeitungspolygones B1 mit den Werkstückpolygonen F1, F2, F3 Schnittpunktberechnungen ausschließlich für solche Polygone vorgenommen werden, die unmittelbar durch das Bearbeitungspolygon betroffen sind.

In der praktischen Durchführung des erfindungsgemäßen Verfahrens drückt sich das so aus, daß die durch Polygone begrenzten Flächen F1, F2, F3 gleichberechtigt nebeneinander bestehen. Nach Figur 2a schneidet das Bearbeitungspolygon B1 zuerst die obere Kante der Fläche F3, danach die Grenzkante zwischen F3 und F2, und beim Austritt aus dem Werkstück R wieder die Grenzkanten von F3 und F2.

Die Schnittpunktermittlung vollzieht sich nun in folgenden einfachen Schritten:

Beim Eintritt des Bearbeitungspolygons B1 in die Fläche F3 ist nur die Fläche F3 betroffen, weder die Flächen F2 noch F1 werden tangiert. Aus diesem Grund ist zu diesem Zeitpunkt auch nur eine Schnittpunktbetrachtung unter Berücksichtigung der dritten Dimension für das Bearbeitungspolygon B1 mit der Fläche F3 von Bedeutung. Schnittpunktberechnungen mit anderen Flächen können entfallen, da diese —F2 und F1—keine Teilflächen von F3 sind.

Bereits bei dieser einfachen Sachlage reduziert sich in vorteilhafter Weise der rechnerische Aufwand für die Polygonverknüpfung.

Beim Austritt des Bearbeitungspolygons B1 an der unteren Kante von F3 erfolgt der Eintritt in F2, also muß hier nun eine Schnittpunktbetrachtung für die Fläche F2 erfolgen, und zwar wieder unter Berücksichtigung der dritten Dimension. Anhand der Seitenansicht ist erkennbar, daß zwar die Grenzlinie zwischen F3 und F2 verändert wird, daß aber echte Schnittpunkte mit der Fläche F2 nicht vorhanden sind.

Die Fläche F3 wird durch diesen Bearbeitungsgang jedoch verändert und es entstehen Teilflächen F3.1, F3.2, F3.3, die hierarchisch in der Fläche F3 enthalten sind. Da in den untersuchten Fläche F3 und F2 die Fläche F1 nicht enthalten ist, braucht für deren Polygon keine Schnittpunktbetrachtung zu erfolger.

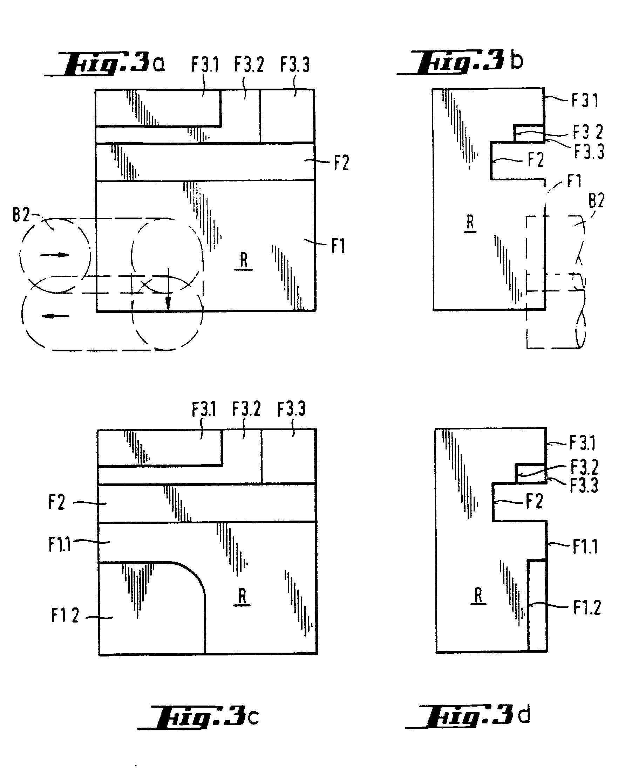

Bei dem nächsten Bearbeitungsschritt wird durch das Bearbeitungspolygon B2 in die Fläche F1 ein Ausschnitt "gefräst", wie durch die Figuren 3a und 3b gezeigt ist. Da gemäß der Erfindung nur Schnittpunktbetrachtungen für jene Polygone erfolgen müssen, die Teilflächen der momentan bearbeiteten Fläche sind, zeigt sich in dieser Phase schon deutlich der Vorteil der Erfindung: Die schon recht zahlreichen Kanten von F2, F3.1, F3.2 und F3.3 brauchen gar nicht auf mögliche Schnittpunkte untersucht zu werden, da sie nicht zu Teilflächen gehören, die in F1 enthalten sind. Gemäß der Figuren 3c und 3d entstehen die Teilflächen F1.1 und F1.2.

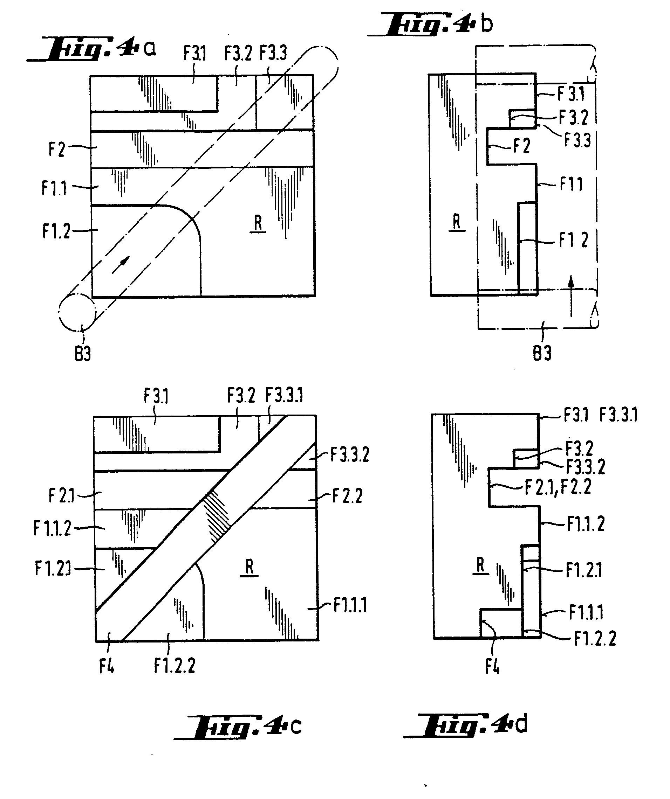

In den Figuren 4a bis 4d ist eine weiterer Arbeitsgang dargestellt, bei dem nun eine Reihe von Verknüpfungen des Bearbeitungspolygons B3 mit den Polygonen F1, F2 und F3 des Werkstückes bzw. deren Teilflächen vorgenommen werden müssen. Das Bearbeitungspolygon B3 schneidet die Fläche F1 bzw. die in ihr enthaltenen Teilflächen F1.1 und F1.2. Schnittpunktberechnungen werden beim Eintritt in die Teilfläche F1.2 vorgenommen, und beim Übergang von der Teilfläche F1.2 in die Teilfläche F1.1. Ferner finden Schnittpunktberechnungen beim Übergang des Bearbeitungspolygons B3 von der Teilfläche F1.1 in die Fläche F2 statt, und beim Übergang von F2 nach F3.2 und F3.1. Bis auf die Teilfläche F3.1 wird jede Teilfläche verändert. Die Teilfläche F3.1 kann also für die Schnittpunktberechnungen außer acht gelassen werden. Wie bereits beschrieben wurde, wird an die Schnittpunktbetrachtungen immer die dritte Dimension einbezogen, so daß anhand der resultierenden Datenstrukturen intern im Microprozessor ein verändertes Modell des bearbeiteten Werkstückes entsteht

Sukzessive wird jede Werkzeugbahn mit der vorhandenen Datenstruktur zu einem neuen Werkstück verknüpft. Immer ausgehend von der im vorangegangenen Werkstückbearbeitungsgang erreichten Werkstückfläche wird der Austrittspunkt des neuen Bearbeitungspolygons aus dieser Fläche ermittelt. Diese Schnittpunktermittlung wird solange fortgesetzt, bis die Ausgangsfläche wieder erreicht ist.

Das vorbeschriebene Verfahren führt zu einer erheblichen Reduktion von Rechenzeit und Speicherplatzbedarf gegenüber herkömmlichen Verfahren, wie sie beispielsweise in der Literaturstelle "Barton, E.E.; Buchanan, I.: The polygone package. Computer-aided design Vol. 12, No. 1, Jan. 1980, pp. 3—11" beschrieben werden. So ist es bei der Erfindung auch nicht nötig, Hilfsdatenstrukturen zu erstellen, sondern es ist mit geringem Aufwand möglich, mit Hilfe der im vorbeschriebenen Sinne hierarchischen Datenstruktur zu überprüfen, welche Polygone im momentanen Bearbeitungspolygon gebildet werden. Die Betrachtung nur des momentan betroffenen Polygons und der in ihm gebildeten Teilflächen-Polygone bei der Verknüpfung mit dem Bearbeitungspolygon ermöglicht die Durchführung des Verfahrens auch mit kleineren Rechnersystemen wie sie in einer NC-gesteuerten Werkzeugmaschine vorhanden sind.

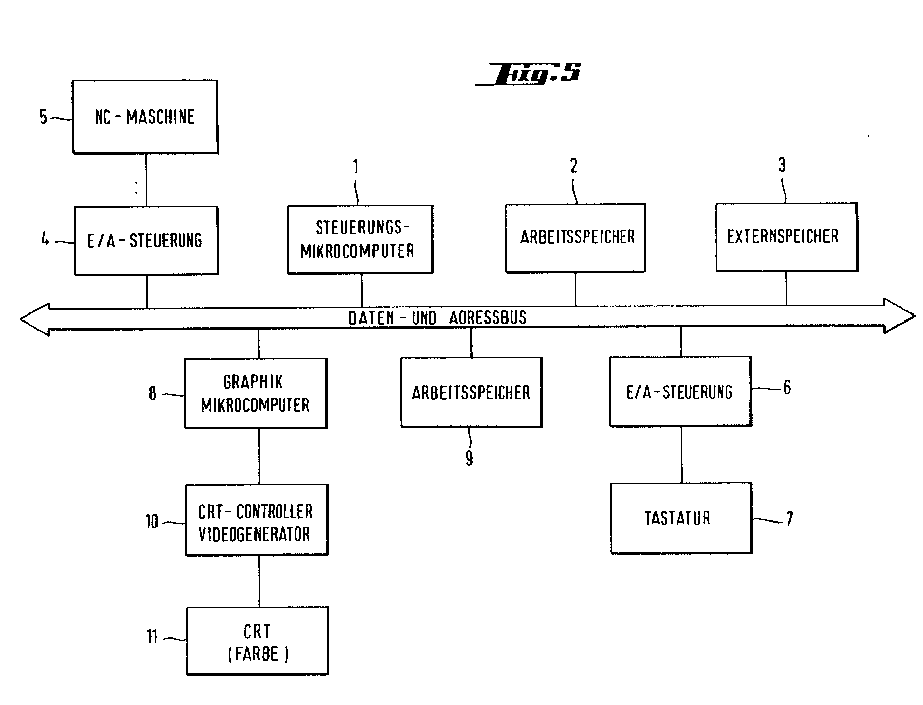

Ein Blockschaltbild einer Einrichtung zum Durchführen des erfindungsgemäßen Verfahrens zeigt die Figur 5: Der Steuerungs-Microcomputer 1 mit seinem Arbeitsspeicher 2 steuert die NC-Programmüberwachung von der Mini-Kassette im Externspeicher 3, erzeugt die Werkzeugwege, über die E/A-Steuerung 4 steuert er die Maschinenachsen der NC-Maschine 5 und liest deren Istwerte. Über die E/A-Schnittstelle 6 übernimmt und verarbeitet er Bedienereingaben auf der Tastatur 7. Der Grafik-Microcomputer 8 mit seinem Arbeitsspeicher 9 bereitet die Dialogmasken für Bediendialoge auf, formatiert die Istwerte, berechnet gemäß dem in dieser Erfindung beschriebenen Verfahren die grafischen Daten zur Darstellung des jeweiligen Werkstückes, die über den CRT-Controller mit Videogenerator 10 auf dem Farbbildschirmgerät 11 dargestellt werden.

**Patentansprüche**

1. Verfahren zur graphischen Darstellung eines von einer numerisch gesteuerten Werkzeugmaschine mittels eines Werkzeugs mit vorbestimmtem Bearbeitungsquerschnitt aus einem Werkstückrohling (R) herzustellenden Werkstücks, mit einem Mikrocomputer (1), in dessen Datenspeicher (2) Daten über die Abmessungen des Werkstücks (R) und des Werkzeugs sowie über die vorprogrammierten Bewegungsbahnen (B0 bis B3) des Werkzeuges abgespeichert sind und mit einem Bildschirmgerät (11), zur Kantendarstellung der anhand der gespeicherten Abmessungs- und Bewegungsdaten von dem Mikrocomputer (1) errechneten Form des Werkstücks (R), dadurch gekennzeichnet, daß der Mikrocomputer (12) anhand der gespeicherten Daten Beranderungspolygone von momentan bearbeiteten Werkstückoberflächen (F0 bis F3.3.2) und Werkzeug-Bewegungsbahnen (B0 bis B3) und deren Schnittpunkte miteinander errechnet und diese Berandungspolygone (F0 bis F3.3.2) durch die Schnittpunktberechnung entsprechend der Bewegungsbahn (Bi) des Werkzeugs sukzessiv verändert, wobei aus den momentan bearbeiteten Werkstückoberflächen (Fi) Teiloberflächen (Fi.i) als neue Berandungspolygone entstehen und daß der Mikrocomputer (1) bei der weiteren Veränderung der Berandungspolygone ausschließlich für jene Teilflächen (Fi.i) Schnittpunkte mit der Bewegungsbahn des Werkzeugs (Bi) errechnet, die als momentan bearbeitete Flächen betroffen sind, und daß die Darstellung des veränderten Werkstücks sukzessive anhand der so entstehenden Berandungspolygon (F0 bis F3.3.2) erfolgt.

2. Verfahren nach Anspruch 1, dadurch gekennzeichnet, daß zur Ermittlung der Schnittpunkte bei der Polygonverknüpfung die dritte Dimension mit einbezogen wird.

3. Verfahren nach Anspruch 1 und 2, dadurch gekennzeichnet, daß anhand der resultierenden Datenstruktur für die Darstellung des veränderten Werkstückes (R) die weggefallenen Kanten gelöscht werden.

4. Verfahren nach Anspruch 1 bis 3, dadurch gekennzeichnet, daß anhand der resultierenden Datenstruktur nur die sichtbaren Kanten dargestellt werden.

5. Verfahren nach Anspruch 1, dadurch gekennzeichnet, daß anhand der vorgegebenen Datenstruktur des Werkstückes (R) ein internes Modell eines Werkstückes (R) erzeugt wird.

6. Verfahren nach Anspruch 1, dadurch gekennzeichnet, daß die Darstellung des Werkstückes (R) wahlweise perspektivisch oder zweidimensional in mehreren Ansichten erfolgt.

7. Verfahren nach Anspruch 1 und 6, dadurch gekennzeichnet, daß Ausschnittsvergrößerungen darstellbar sind.

8. Verfahren nach Anspruch 1, dadurch gekennzeichnet, daß wenigstens zur Kennzeichnung verschiedener Bearbeitungsschritte, zur Verdeutlichung räumlicher Darstellungen und zur Erhöhung der Unterscheidbarkeit zwischen Benutzereingaben und Systemvorgaben eine Farbcodierung der Darstellung vorgesehen ist.

**Revendications**

1. Procédé pour la représentation graphique d'une pièce devant être réalisée à partir d'une pièce brute (R) par une machine-outil à commande numérique au moyen d'un outil ayant une section d'usinage prédéterminée, avec un micro-ordinateur (1) dans la mémoire de données (2) duquel sont mémorisées des données sur les dimensions de la pièce (R) et de l'outil ainsi que sur les trajectoires de mouvement (B0 à B3) préprogrammées de l'outil, et avec un terminal à écran (11) pour la représentation des arêtes de la forme de la pièce (R), calculée par le micro-ordinateur à l'aide des données de dimensions et de mouvement mémorisées, caractérisé par le fait que le micro-ordinateur (12) calcule à l'aide des données mémorisées des polygones de contour de surfaces momentanément usinées (F0 à F3.3.2) de la pièce et de trajectoires de mouvement (B0 à B3) de l'outil et les points d'intersection de ces polygones et modifie successivement ces polygones de contour (F0 à F3.3.2) par le calcul des points d'intersection en fonction de la trajectoire de mouvement (Bi) de l'outil, des surfaces partielles (Fi.i) étant créées, en tant que nouveaux polygones de contour, à partir des surfaces momentanément usinées (Fi) de la pièce, et que, lors de la modification ultérieure des polygones de contour, le micro-ordinateur (1) calcule les points d'intersection avec la trajectoire de mouvement (Bi) de l'outil uniquement pour les surfaces partielles (Fi.i) qui sont concernées en tant que surfaces momentanément usinées, et que la représentation de la pièce modifiée est effectuée successivement à l'aide des polgyones de contour (F0 à F3.3.2) ainsi créés.

2. Procédé selon revendication 1, caractérisé par le fait que pour la détermination des points d'intersection lors de la combinaison de polygones, la troisième dimension est incluse.

3. Procédé selon revendication 1 et 2, caractérisé par le fait que, sur la base de la structure de données résultante pour la représentation de la pièce (R) modifiée, les arêtes supprimées sont effacées.

4. Procédé selon revendication 1 à 3, caractérisé par le fait que, sur la base de la structure de données résultante, seules les arêtes visibles sont représentées.

5. Procédé selon revendication 1, caractérisé par le fait que, sur la base de la structure de données prédéterminée de la pièce (R), un modèle interne d'une pièce (R) est généré.

6. Procédé selon revendication 1, caractérisé par le fait que la représentation de la pièce (R) est effectuée au choix en perpsective ou en deux dimensions dans plusieurs projections.

7. Procédé selon la revendication 1 et 6, caractérisé par le fait que des agrandissements de détails peuvent être représentés.

8. Procédé selon la revendication 1, caractérisé par le fait qu'au moins pour l'identification de différentes étapes d'usinage, pour l'amélioration de la clarté de représentations tridimensionnelles et pour une meilleure distinction entre données introduites par l'utilisateur et données prédéterminées par le système, un codage par couleurs de la représentation est prévu.

## Claims

1. Method of graphical representation of a workpiece to be produced from a workpiece blank (R) by a numerically controlled machine tool by means of a tool with a predetermined working cross-section, with a microcomputer (1), in whose data memory (2) there are stored data on the dimensions of the workpiece (R) and of the tool as well as on the pre-programmed path of movement (B0 to B3) of the tool, and with a display screen apparatus (11) for line display of the computed form of the workpiece (R) on the basis of the stored dimension and movement data, characterized in that the microcomputer (12) computes, on the basis of the stored data, bounding polygons of instantaneously worked workpiece surfaces (F0 to F3.3.2) and tool movement paths (B0 to B3) and their intersections with each other and successively modifies these bounding polygons (F0 to F3.3.2) by the computation of points of intersection in accordance with the path of movement (Bi) of the tool, wherein partial surfaces (Fi,i) result from the instantaneously worked workpiece surfaces (Fi) as new bounding polygons, and in that the microcomputer (1) in the further modification of the bounding polygons computes for each partial surface (Fi,i) exclusively points of intersection with the path of movement of the tool (Bi), which are involved as instantaneously worked surfaces, and in that the representation of the modified workpiece is effected successively on the basis of the thus resulting bounding polygons (F0 to F3.3.2).

2. Method according to claim 1, characterized in that the third dimension is involved in the determination of the points of intersection in the combination of polygons.

3. Method according to claims 1 and 2, characterized in that the disappearing edges are erased on the basis of the resultant data structure for the representation of the modified workpiece (R).

4. Method according to claims 1 to 3, characterized in that only the visible edges are represented in accordance with the resultant data structure.

5. Method according to claim 1, characterized in that an internal model of a workpiece (R) is created on the basis of the predetermined data structure of the workpiece (R).

6. Method according to claim 1, characterized in that the representation of the workpiece (R) is effected selectively in perspective or in two dimensions in a plurality of views.

7. Method according to claims 1 and 6, characterized in that sectional enlargements can be represented.

8. Method according to claim 1, characterized in that a colour coding of the representation is provided at least for characterizing different working steps, for clarifying spatial representations and for enhancing the distinction between user inputs and system parameters.

# *Fig.1*a

# *Fig.1*b

# *Fig.1*c

# *Fig.1*d

_Fig._2a

B1

F3

F2

R

F1

_Fig._2b

B1

F3

F2

R

F1

F3.2

F3.1

F3.3

F2

R

F1

_Fig._2c

F3.1

F3.2

F3.3

F2

R

F1

_Fig._2d

*Fig.3* a    F3.1   F3.2   F3.3

*Fig.3* b

F2

B2

F1

R

F3.1

F3.2

F3.3

F2

F1

R

B2

F3.1   F3.2   F3.3

F2

F1.1

F1.2

R

*Fig.3* c

F3.1

F3.2

F3.3

F2

F1.1

F1.2

R

*Fig.3* d

Fig. 4 a

Fig. 4 b

Fig. 4 c

Fig. 4 d

Fig.5

NC - MASCHINE — 5

4 — E / A - STEUERUNG

STEUERUNGS-MIKROCOMPUTER — 1

ARBEITSSPEICHER — 2

EXTERNSPEICHER — 3

DATEN - UND ADRESSBUS

8 — GRAPHIK MIKROCOMPUTER

ARBEITSSPEICHER — 9

E/A - STEUERUNG — 6

10 — CRT- CONTROLLER VIDEOGENERATOR

TASTATUR — 7

11 — CRT (FARBE)

EP 0 153 556 B1